# EUROPÄISCHE PATENTSCHRIFT

(11) **EP 1 433 803 B1**
(45) Veröffentlichungstag und Bekanntmachung des Hinweises auf die Patenterteilung: **09.02.2005**
(21) Anmeldenummer: 03104006.6
(22) Anmeldetag: 29.10.2003
(51) Int. Cl.: C08G 63/00, C08F 283/01, C09D 167/06, C08J 3/07, C09D 133/06, C09D 167/00, C09D 201/00

(54) **Dispersionen amorpher, urethanisierter ungesättigter Polyesterharze auf Basis bestimmter Dicidolisomerer**
Dispersions of amorphous, urethanised unsaturated polyester resins based on certain dicidol isomers
Dispersions des polyester résines amorphes, urethannisées et non saturées à base des certaines dicidol isomères

(30) Priorität: 24.12.2002 DE 10261005
(43) Veröffentlichungstag der Anmeldung: 30.06.2004
(73) Patentinhaber: Degussa AG, 40474 Düsseldorf (DE)
(72) Erfinder: Glöckner, Patrick, Dr., 40885, Ratingen (DE); Mindach, Lutz, Dr., 45770, Marl (DE); Ortelt, Martina, Dr., 48249, Dülmen (DE)

(56) Entgegenhaltungen:
- US-A- 5 648 410
- US-B1- 6 277 910

## Beschreibung

Die Erfindung betrifft Dispersionen amorpher, urethanisierter, ungesättigter Polyesterharze auf Basis bestimmter Dicidolisomerer und Säuren.

Ungesättigte Polyesterharze (UP-Harze) sind bekannt. Sie werden durch Kondensation von gesättigten und ungesättigten Dicarbonsäuren oder deren Anhydriden mit Diolen hergestellt. Ihre Eigenschaften hängen weitgehend von Art und Mengenverhältnis der Ausgangsstoffe ab.

Als Träger der polymerisationsfähigen Doppelbindungen werden meist α,β-ungesättigte Säuren verwendet, in erster Linie Maleinsäure bzw. deren Anhydrid oder Fumarsäure; ungesättigte Diole sind von untergeordneter Bedeutung. Je höher der Gehalt an Doppelbindungen, d. h. je kürzer der Abstand der Doppelbindungen in den Kettenmolekülen ist, um so reaktiver ist das Polyesterharz. Es polymerisiert sehr rasch unter starker Wärmeentwicklung und hoher Volumenschrumpfung zu einem hochvernetzten und daher verhältnismäßig spröden Endprodukt. Man "verdünnt" deshalb die reaktionsfähigen Doppelbindungen im Polyestermolekül durch Einkondensieren gesättigter aliphatischer oder aromatischer Dicarbonsäuren. Als Alkoholkomponenten werden geradkettige und verzweigte Diole verwendet. Die einzelnen UP-Harztypen unterscheiden sich nicht nur durch die zu ihrer Herstellung verwendeten Komponenten sondern auch durch das Mengenverhältnis von gesättigten zu ungesättigten Säuren, das die Vernetzungsdichte bei der Polymerisation bestimmt, den Kondensationsgrad, d. h. die Molmasse, die Säure- und OH-Zahl, d. h. die Art der Endgruppen in den Kettenmolekülen, den Monomergehalt, die Art der Zusätze (Ullmann's Encyclopedia of Industrial Chemistry, VOL A21, S. 217 ff., 1992).

UP-Harze auf Basis von Dicidol als Diolkomponente sind z. B. bekannt aus DE 924 889, DE 953 117, DE 22 45 110, DE 27 21 989, EP 0 114 208, EP 0 934 988.

Aufgabe der vorliegenden Erfindung war es, aus der Vielzahl der Möglichkeiten und Variationsbreite des Standes der Technik neue urthanisierte, ungesättigte und amorphe Polyesterharze zu finden, die außerdem wasserdispergierbar und als Feststoff transparent sind. Die Aufgabe wurde wie nunmehr erläutert gelöst.

Gegenstand der Erfindung sind wässrige Dispersionen von amorphen, urethanisierten, ungesättigten Polyesterharzen,
wobei das Polyesterharz aufgebaut ist aus
I. einer Alkoholkomponente,
II. 20 bis 100 mol-% einer α, β ungesättigten Carbonsäurekomponente
   und
   0 bis 80 mol-% einer weiteren Carbonsäurekomponente,
III. mindestens einer Isocyanatkomponente,
dadurch gekennzeichnet,
dass die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas
aufweisen.

Die erfindungsgemäßen Dispersionen der amorphen, urethanisierten, ungesättigten Polyesterharze werden durch Polykondensation der Alkoholkomponente und der Säurekomponente und anschließender Umsetzung mit einer Isocyanatkomponente und ggf. einer weiteren Polyolkomponente und anschließender Dispergierung in Wasser nach Neutralisation erhalten.

Als Alkoholkomponente wird erfindungsgemäß ein Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan eingesetzt, wobei jedes Isomere zu einem Anteil von 20 bis 40 % in dem Gemisch enthalten sein kann und die Summe der drei Isomeren 90 bis 100 %, bevorzugt 95 bis 100 % ergibt, und das Gemisch mindestens zu 10 Gew.-% in der Alkoholkomponente des Polyesters vorhanden ist. Der Isomergehalt des Dicidolgemisches kann qualitativ und quantitativ z. B. durch GC-Analyse oder quantitativ durch Trennung mittels präparativer GC oder HPLC und anschließender NMR-Spektroskopie bestimmt werden. Alle entsprechenden Isomeren des Dicidols in 9-Stellung sind genau so geeignet, aber auf Grund der Spiegelsymmetrie von den o. g. Isomeren, wie auch die cis- und trans-Isomeren, unter normalen, praxisbezogenen Umständen nicht unterscheidbar. Außerdem kann das Dicidolgemisch bis zu 10 % weitere Isomere des Dicidol und/oder trimere und/oder höhere isomere Diole des Diels-Alder-Umsetzungsproduktes aus Cyclopentadien enthalten. Bevorzugt besteht die Alkoholkomponente aus 20 %, aus 30 %, bevorzugt aus 60 %, besonders bevorzugt aus 100 % Dicidolgemisch, wobei dieses besonders bevorzugt 95 bis 100 % der oben genannten drei isomeren Verbindungen enthält.

Neben dem Dicidolgemisch kann die Alkoholkomponente maximal 90 Gew.-% weitere lineare und/oder verzweigte, aliphatische und/oder cycloaliphatische und/oder aromatische Diole und/oder Polyole enthalten. Bevorzugt werden als zusätzliche Alkohole Ethylenglykol, 1,2-und/oder 1,3-Propandiol, Diethylen-, Dipropylen-, Triethylen-, Tetraethylenglykol, 1,2-und/oder 1,4-Butandiol, 1,3-Butylethylpropandiol, 1,3-Methylpropandiol, 1,5-Pentandiol, Bisphenol A, B, C, F, Norbornylenglykol, 1,4-Benzyldimethanol und -ethanol, 2,4-Dimethyl-2-ethylhexan-1,3-diol, Cyclohexandimethanol, Glycerin, Hexandiol, Neopentylglycol, Trimethylolethan, Trimethylolpropan und/oder Pentaerythrit eingesetzt.

Die erfindungsgemäßen amorphen, urethanisierten, ungesättigten Polyesterharze enthalten als Ausgangssäurekomponente mindestens 20 bis 100 mol-%, bevorzugt 50 bis 100 mol-%, besonders bevorzugt 80 bis 100 mol-%, einer α,β-ungesättigten Dicarbonsäure. Bevorzugt werden Citracon-, Fumar-, Itacon-, Malein- und/oder Mesaconsäure verwendet. Ganz besonders bevorzugt werden Fumar- und/oder Maleinsäure(anhydrid) eingesetzt.

Es können auch zusätzlich aromatische und/oder aliphatische und/oder cycloaliphatische Monocarbonsäuren und/oder Dicarbonsäuren und/oder Polycarbonsäuren in Mengen von bis zu 80 mol-%, bevorzugt bis zu 50, besonders bevorzugt bis zu 20 mol-%, enthalten sein, wie z. B. Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Pyromellitsäure und/oder Trimellitsäure, Isononansäure, 2-Ethylhexansäure. Bevorzugt sind Phthalsäure, Hexahydrophthalsäure, Tetrahydrophthalsäure, Hexahydroterephthalsäure, Trimellitsäure, Adipin- und/oder Azelainsäure.

Die Säurekomponente kann teilweise oder vollständig aus Anhydriden und/oder niedermolekularen Alkylestern, bevorzugt Methylestern und/oder Ethylestern, bestehen.

Im Allgemeinen ist die Alkoholkomponente im Mol-Verhältnis von 0,5 bis 2,0 zu 1 zur Säurekomponente enthalten, bevorzugt 0,8 bis 1,5 zu 1. Besonders bevorzugt findet die Umsetzung der Alkoholkomponente im Mol-Verhältnis von 1,0 bis 1,3 zu 1 zur Säurekomponente statt.

Die Urethanisierung des ungesättigten, amorphen Polyesters erfolgt durch Umsetzung des ungesättigten, amorphen Polyesters mit einer Isocyanatkomponente und ggf. einer weiteren Polyolkomponente, wobei pro mol Polyester 0,2 bis 1,5 mol Isocyanatkomponente eingesetzt wird. Gegebenenfalls wird die Urethanisierung in Anwesenheit von 0,2 bis 1,5 mol einer weiteren Polyolkomponente oder daran anschließend durchgeführt.

Als Isocyanatkomponente bevorzugt eingesetzte Isocyanate sind aliphatische und/oder cycloaliphatische Polyisocyanate mit einem mittleren Molekulargewicht von bis zu etwa 1000 g/mol und einer mittleren Isocyanatfunktionalität von 2 bis 4. Dazu gehören beispielsweise einfache Diisocyanate wie 1,6-Diisocyanatohexan (HDI), Bis(4-isocyanatocyclohexyl)methan (HMDI), 1,5-Diisocyanato-2-methylpentan (MPDI), 1,6-Diisocyanato-2,4,4-trimethylhexan (TMDI) sowie insbesondere 3-Isocyanatomethyl-3,5,5-trimethylcyclohexylisocyanat (IPDI) und/oder ihre technischen Gemische. Darüber hinaus ist die Verwendung von Polyisocyanaten möglich, welche durch Umsetzung mit bifunktionellen Reaktionspartnern (beispielsweise Diole, Diamine, Dihydroxycarbonsäuren etc.) erhältlich sind. Eine andere bevorzugte Klasse von Polyisocyanaten ist die durch Trimerisierung, Allophanatisierung, Biurethisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie beispielsweise IPDI, HDI und/oder HMDI mit mehrwertigen Alkoholen (z. B. Glycerin, Trimethylolpropan, Pentaerythrit) bzw. mehrwertigen Polyaminen oder die Triisocyanurate, die durch Trimerisierung der einfachen Diisocyanate, wie beispielsweise IPDI, HDI und HMDI, erhältlich sind. Als Vertreter der aromatischen Polyisocyanate können beispielsweise Tetramethylenxylylendiisocyanat (TMXDI), 2,4- Diisocyanatotoluol und/oder dessen technischen Gemische mit 2,6-Diisocyanatotoluol sowie 4,4'-Diisocyanatodiphenylmethan und/oder dessen technischen Gemische mit 2,4'-Diisocyanatodiphenylmethan verwendet werden.

Als zusätzliche Polyolkomponente können Mono- und Polyhydroxyalkylcarbonsäuren wie sie in der US 3 412 054 beschrieben sind, vorzugsweise 2,2-Dimethylolessigsäure, 2,2-Dimethylolpropionsäure, 2,2-Dimethylolbuttersäure, 2,2-Dimethylolpentansäure, Dihydroxybemsteinsäure, 1,1,1-Trimethylol-essigsäure, Hydroxypivalinsäure oder Gemische derartiger Säuren eingesetzt werden. Weiterhin geeignet sind Mono- bzw. Polyhydroxysulfonsäuren und Mono- bzw. Polyhydroxyphosphonsäuren wie 2,3-Dihydroxypropanphosphonsäure.

Die erfindungsgemäßen urethanisierten, ungesättigten, amorphen Polyesterharze weisen eine Säurezahl zwischen 1 und 200 mg KOH/g, bevorzugt zwischen 1 und 100, besonders bevorzugt zwischen 10 und 50 mg KOH/g sowie eine OH-Zahl zwischen 1 und 200 mg KOH/g, bevorzugt zwischen 1 und 100, besonders bevorzugt zwischen 10 und 80 mg KOH/g auf.

Der Tg der erfindungsgemäßen ungesättigten, amorphen Polyester variiert von -30 bis +80 °C, bevorzugt -20 bis +50 °C, besonders bevorzugt -10 bis +40 °C.

In einer bevorzugten Ausführungsform I bestehen die erfindungsgemäßen amorphen, urethanisierten, ungesättigten Polyesterharze aus einer Alkoholkomponente mit mindestens 80 %, 90 %, bevorzugt 95 %, besonders bevorzugt zu 100 % des Dicidolgemisches der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan und aus Fumarsäure und/oder Maleinsäure (anhydrid), Isophorondiisocyanat und / oder Hexamethylendiisocyanat (HDI) und 2,2-Dimethylolpropionsäure.

In einer weiteren bevorzugten Ausführungsform II enthalten die Polyesterharze die o. g. Ausgangskomponenten wie unter I und zusätzlich eine weitere Säure ausgewählt aus Adipinsäure oder Phthalsäure(anhydrid), wobei das Verhältnis der α, β-ungesättigten zur zusätzlichen Säure von 3 zu 1 bis 1 zu 4 variieren kann. Bevorzugt werden Verhältnisse von ca. 1 zu 1 bis 1 zu 2. Die Polyester weisen allgemein Säurezahlen von 1 bis 200, bevorzugt 1 bis 100, besonders bevorzugt 10 bis 50 mg KOH/g, und OH-Zahlen von 1 bis 200, bevorzugt 1 bis 100, besonders bevorzugt 10 bis 80 mg KOH/g auf.

Die erfindungsgemäßen Dispersionen amorpher, urethanisierter, ungesättigter Polyesterharze können auch Hilfs- und Zusatzstoffe ausgewählt aus Inhibitoren, Lösemitteln, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzmitteln, internen Trennmitteln, Füllstoffen und/oder Treibmitteln, enthalten.

Gegenstand der Erfindung ist auch ein Verfahren zur Herstellung wässriger Dispersionen von amorphen, urethanisierten, ungesättigten Polyesterharzen,
wobei das Polyesterharz aufgebaut ist aus
I. einer Alkoholkomponente,
II. 20 bis 100 mol-% einer α, β ungesättigten Carbonsäurekomponente und
   0 bis 80 mol-% einer weiteren Carbonsäurekomponente,
III. mindestens einer Isocyanatkomponente,
und wobei die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas
aufweisen,
durch Umsetzung der Ausgangskomponenten I. und II. bei einer Temperatur von 150 bis 270 °C und folgender Urethanisierung durch Umsetzung mit der Isocyanatkomponente III, und das erhaltene Polyesterharz nach Neutralisation in die wässrige Phase dispergiert wird.

Hergestellt werden die erfindungsgemäßen Polyesterharze durch (halb)kontinuierliche oder diskontinuierliche Veresterung der Ausgangssäuren II. und -alkohole I. in einstufiger oder mehrstufiger Fahrweise und anschließender Urethanisierung dieses Polyesters durch Zugabe eines geeigneten Poly- und/oder Düsocyanates ggf. der weiteren Polyolkomponente, und anschließender Dispergierung in Wasser.

Die Umsetzung von I. und II. zur Herstellung der ungesättigten, amorphen Polyester, wie oben beschrieben, wird bevorzugt in einer Inertgasatmosphäre bei 150 bis 270 °C, bevorzugt bei 160 bis 230 °C, besonders bevorzugt bei 160 bis 210 °C durchgeführt. Als Inertgas können Stickstoff oder Edelgase, insbesondere Stickstoff eingesetzt werden. Das Inertgas weist einen Sauerstoffgehalt von weniger als 50 ppm, insbesondere weniger als 20 ppm, auf.

Das Verfahren zur Urethanisierung der ungesättigten, amorphen Polyester, wie oben beschrieben, wird ggf. unter Zuhilfenahme eines geeigneten Hilfslösemittels bei bevorzugten Temperaturen unter 100 °C, besonders bevorzugt unter 70°C durchgeführt. Als geeignete Hilfslösemittel werden niedrigsiedende inerte Lösemittel eingesetzt, die mit Wasser zumindest über weite Bereiche keine Mischungslücke bilden, einen Siedepunkt bei Atmosphärendruck unterhalb 100 °C besitzen und sich daher gewünschtenfalls durch Destillation leicht bis auf einen Restgehalt von kleiner 2 Gew.-% und insbesondere von kleiner 0,5 Gew.-% bezogen auf die fertige Dispersion abtrennen und wiederverwenden lassen. Geeignete Lösemittel dieser Art sind z. B. Aceton, Methylethylketon oder Tetrahydrofuran. Grundsätzlich geeignet sind auch höhersiedende Lösemittel wie z. B. n-Butylglykol, Di-n-butylglykol und N-Methylpyrrolidon, die dann in der wasserverdünnbaren Dispersion verbleiben.

Die erfindungsgemäßen Polyesterharze werden mit einem geeigneten Neutralisationsmittel wie z. B. einem Amin oder einer anorganischen Lauge, bevorzugt sind Ammoniak, Dimethylethanolamin, Triethylamin und/oder NaOH, teilweise oder vollständig neutralisiert. Der Neutralisationsgrad liegt zwischen 0,3 und 1,2, bevorzugt zwischen 0,4 und 1,1, besonders bevorzugt zwischen 0,6 und 1,05, wodurch dann ein wasserverdünnbarer amorpher, urethanisierter, ungesättigter Polyester erhalten wird. Dieser wird, wie oben beschrieben, ggf. unter Verwendung bis zu 60-Gew.-% eines geeigneten Hilfslösemittels, in Wasser dispergiert. Das eingesetzte Hilfslösemittel kann je nach Anwendungszweck der Dispersion abschließend aus der resultierenden Dispersion destillativ entfernt werden.

Die erfindungsgemäßen wässrigen Dispersionen amorpher, urethanisierter, ungesättigter Polyester werden durch die folgenden Beispiele näher erläutert:

### Beispiele

Ausgangskomponente Dicidolgemisch (Anspruch 1) im Isomerverhältnis von annähernd 1:1:1

### Beispiel 1:

### Urethanisierter Polyester I

1,25 mol Adipinsäure werden mit 3,675 mol Dicidol bei max. 210°C in Stickstoffatmosphäre zur Reaktion gebracht bis eine Säurezahl unter 5 mg KOH/g erreicht ist. Dann werden 1,25 mol Fumarsäure und 0,05 Gew.-% Hydrochinonmonomethylether (bez. auf Fumarsäure) zugegeben. Nach 2 h Rühren wird ein Vakuum von 20 mbar angelegt, bis eine Säurezahl unter 5 mg KOH/g erreicht ist. Der Polyester wird nach Abkühlung 60 %ig in Aceton gelöst.

1128 g dieser Polyesterlösung werden mit 431,9 g eines Adduktes, bestehend aus zwei Mol Isophorondiisocyanat und einem Mol Dimethylolpropionsäure (60%ige Lösung in Aceton), in Anwesenheit von 1,0 g Dibutylzinndilaurat über 14 h bei Rückflusstemperatur umgesetzt, bis ein NCO-Gehalt kleiner 0,1% erreicht ist.
Kennzahlen:
Säurezahl : 26,6 mg KOH/g, Feststoffanteil : 63,5 %.

### Herstellung einer wässrigen Dispersion I

Der oben beschriebene urethanisierte Polyester I wird auf einen Feststoffanteil von 50 % mit Aceton verdünnt und mit DMAE entsprechend eines Neutralisationsgrades von 1,05 versetzt. Unter starkem Rühren wird entsalztes Wasser zugegeben und nach weiteren 30 min das Aceton im leichten Vakuum abdestilliert. Man erhält eine lagerstabile, lösemittelfreie Dispersion mit einem Festkörper von ca. 27 %.
Kennzahlen:
Viskosität_{D=200}: 320 mPas, pH-Wert : 8,8, Feststoffanteil : 27,3 %.

### Beispiel 2:

### Urethanisierter Polyester II

1,25 mol Adipinsäure werden mit 3,675 mol Dicidol bei max. 210 °C in Stickstoffatmosphäre zur Reaktion gebracht bis eine Säurezahl unter 5 mg KOH/g erreicht ist. Dann werden 1,25 mol Fumarsäure und 0,05 Gew.-% Hydrochinonmonomethylether (bez. auf Fumarsäure) zugegeben. Nach 2 h Rühren wird ein Vakuum von 20 mbar angelegt, bis eine Säurezahl unter 5 mg KOH/g erreicht ist. Der Polyester wird nach Abkühlung 60%ig in Aceton gelöst. 1129 g dieser Polyesterlösungwerden mit 431,9 g eines Adduktes, bestehend aus zwei Mol

Isophorondiisocyanat und einem Mol Dimethylolpropionsäure (60%ige Lösung in Aceton), in Anwesenheit von 1,0 g Dibutylzinndilaurat über 14 h bei Rückflusstemperatur umgesetzt bis ein NCO-Gehalt kleiner 0,1 % erreicht ist.
Kennzahlen:
Säurezahl: 23,1 mg KOH/g, Feststoffanteil: 60,8 %.

### Herstellung einer wässrigen Dispersion I

Der oben beschriebene urethanisierte Polyester II wird auf einen Feststoffanteil von 50 % mit Aceton verdünnt und mit DMAE entsprechend eines Neutralisationsgrades von 1,00 versetzt. Unter starkem Rühren wird entsalztes Wasser zugegeben und nach weiteren 30 min das Aceton im leichten Vakuum abdestilliert. Man erhält eine lagerstabile, lösemittelfreie Dispersion mit einem Festkörper von ca. 27 % erhalten.
Kennzahlen:
Viskosität_{D=200}: 370 mPas, pH-Wert: 8,5, Feststoffanteil: 27,3 %.

## Patentansprüche

1. Wässrige Dispersionen von amorphen, urethanisierten, ungesättigten Polyesterharzen,
wobei das Polyesterharz aufgebaut ist aus
I. einer Alkoholkomponente,
II. 20 bis 100 mol-% einer α, β ungesättigten Carbonsäurekomponente
und
0 bis 80 mol-% einer weiteren Carbonsäurekomponente,
III. mindestens einer Isocyanatkomponente,
**dadurch gekennzeichnet,**
**dass** die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas
aufweisen.

2. Wässrige Dispersionen nach Anspruch 1,
**dadurch gekennzeichnet,**
**dass** bis zu 10 % weitere Isomere des Dicidols und/oder trimere und/oder höhere isomere Diole des Diels-Alder-Umsetzungsproduktes aus Cyclopentadien enthalten sind.

3. Wässrige Dispersionen nach mindestens einem der vorherigen Ansprüche,
**dadurch gekennzeichnet,**
**dass** die Alkoholkomponente zu mindestens zu 20 mol-% aus Dicidol besteht.

4. Wässrige Dispersionen nach mindestens einem der vorherigen Ansprüche,
**dadurch gekennzeichnet,**
**dass** die Alkoholkomponente zu mindestens zu 30 mol-% aus den Diciol besteht.

5. Wässrige Dispersionen nach mindestens einem der vorherigen Ansprüche,
**dadurch gekennzeichnet,**
**dass** die Alkoholkomponente zu mindestens 60 % aus Dicidol besteht.

6. Wässrige Dispersionen nach mindestens einem der vorherigen Ansprüche,
**dadurch gekennzeichnet,**
**dass** die Alkoholkomponente zu 100 mol-% aus den Dicidol besteht.

7. Wässrige Dispersionen nach mindestens einem der vorherigen Ansprüche,
**dadurch gekennzeichnet,**
**dass** die Alkoholkomponente maximal 90 mol-% weitere lineare und/oder verzweigte, aliphatische und/oder cycloaliphatische und/oder aromatische Diole und/oder Polyole enthält.

8. Wässrige Dispersionen nach einem der vorherigen Ansprüche,
**dadurch gekennzeichnet,**
**dass** als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit Bisphenol A, B, C, F, Norbomylenglykol, 1,4-Benzyldimethanol und - ethanol, 2,4-Dimethyl-2-ethylhexan-1,3-diol enthalten sind.

9. Wässrige Dispersionen nach mindestens einem der vorherigen Ansprüche,
**dadurch gekennzeichnet ,**
**dass** als α, β-ungesättigte Säurekomponente Citracon-, Fumar-, Itacon-, Malein- und/oder Mesaconsäure enthalten sind.

10. Wässrige Dispersionen nach einem der vorherigen Ansprüche,
**dadurch gekennzeichnet,**
**dass** als α, β-ungesättigte Säurekomponente Fumarsäure und/oder Maleinsäure(anhydrid) enthalten sind.

11. Wässrige Dispersionen nach einem der vorherigen Ansprüche,
**dadurch gekennzeichnet,**
**dass** als weitere Säurekomponente aromatische und/oder aliphatische und/oder cycloaliphatische Monocarbonsäuren und/oder Dicarbonsäuren und/oder Polycarbonsäuren enthalten sind.

12. Wässrige Dispersionen nach Anspruch 11,
**dadurch gekennzeichnet,**
**dass** als weitere Säurekomponente Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Pyromellithsäure und/oder Trimellithsäure, deren Säureanhydride und/oder Methylester sowie Isononansäure und/oder 2-Ethylhexansäure enthalten sind.

13. Wässrige Dispersionen nach Anspruch 12,
**dadurch gekennzeichnet,**
**dass** als weitere Säurekomponente Adipinsäure und/oder Phthalsäure(anhydrid) enthalten sind.

14. Wässrige Dispersionen nach mindestens einem der vorherigen Ansprüche,
**dadurch gekennzeichnet,**
**dass** die Säurekomponenten teilweise oder ganz aus Anhydriden und/oder Alkylestern bestehen.

15. Wässrige Dispersionen nach mindestens einem der vorherigen Ansprüche,
**dadurch gekennzeichnet,**
**dass** die Alkoholkomponente des Polyesterharzes im Mol-Verhältnis von 0,5 bis 2,0 zu 1 zur Säurekomponente enthalten ist.

16. Wässrige Dispersionen nach mindestens einem der vorherigen Ansprüche,
**dadurch gekennzeichnet,**
**dass** die Alkoholkomponente des Polyesterharzes im Mol-Verhältnis von 0,8 bis 1,5 zu 1 zur Säurekomponente enthalten ist.

17. Wässrige Dispersionen nach mindestens einem der vorherigen Ansprüche,
**dadurch gekennzeichnet,**
**dass** die Alkoholkomponente des Polyesterharzes im Mol-Verhältnis von 1,0 bis 1,3 zu 1 zur Säurekomponente enthalten ist.

18. Wässrige Dispersionen nach mindestens einem der vorherigen Ansprüche,
**dadurch gekennzeichnet,**
**dass** die Polyesterharze eine Säurezahl zwischen 1 und 200 mg KOH/g, bevorzugt zwischen 1 und 100, besonders zwischen 10 und 50 mg KOH/g aufweisen.

19. Wässrige Dispersionen nach mindestens einem der vorherigen Ansprüche,
**dadurch gekennzeichnet,**
**dass** die Polyesterharze eine OH-Zahl zwischen 1 und 200 mg KOH/g, bevorzugt zwischen 1 und 100, besonders bevorzugt zwischen 10 und 80 mg KOH/g aufweisen.

20. Wässrige Dispersionen nach mindestens einem der vorherigen Ansprüche,
**dadurch gekennzeichnet,**
**dass** der amorphe, ungesättigte Polyester zur Urethanisierung als Isocyanatkomponente III. ein Poly- und/oder Diisocyanat enthält.

21. Wässrige Dispersionen nach Anspruch 20,
**dadurch gekennzeichnet,**
**dass** der amorphe, ungesättigte Polyester zur Urethanisierung zusätzlich eine weitere Polyolkomponente enthält.

22. Wässrige Dispersionen nach mindestens einem der vorherigen Ansprüche,
**dadurch gekennzeichnet,**
**dass** als Diisocyanat zur Urethanisierung ein aromatisches, aliphatisches und/oder cycloaliphatisches Diisocyanat enthalten ist.

23. Wässrige Dispersionen nach mindestens einem der vorherigen Ansprüche,
**dadurch gekennzeichnet,**
**dass** als Diisocyanat zur Urethanisierung Isophorondiisocyanat und/oder Hexamethylendiisocyanat und / oder 4,4'-Methylenbis(cyclohexyldiisocyanat) enthalten ist.

24. Wässrige Dispersionen nach mindestens einem der vorherigen Ansprüche,
**dadurch gekennzeichnet,**
**dass** zur Urethanisierung als weitere Polyolkomponente eine Bishydroxyalkylcarbonsäure enthalten ist.

25. Wässrige Dispersionen nach mindestens einem der vorherigen Ansprüche,
**dadurch gekennzeichnet,**
**dass** Hilfs- und Zusatzstoffe enthalten sind.

26. Wässrige Dispersionen nach mindestens einem der vorherigen Ansprüche,
**dadurch gekennzeichnet,**
**dass** Hilfs- und Zusatzstoffe, ausgewählt aus Inhibitoren, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzmitteln, internen Trennmitteln, Füllstoffen und/oder Treibmitteln, enthalten sind.

27. Wässrige Dispersionen nach mindestens einem der vorherigen Ansprüche,
**dadurch gekennzeichnet,**
**dass** die Alkoholkomponente des ungesättigten, amorphen Polyesterharzes aus mindestens 80 % Dicidolgemisch besteht und Fumarsäure und/oder Maleinsäure(anhydrid) enthalten ist.

28. Wässrige Dispersionen nach einem der vorherigen Ansprüche,
**dadurch gekennzeichnet,**
**dass** im amorphen, urethanisierten, ungesättigten Polyesterharzes zusätzlich Adipinsäure und/oder Phthalsäure(anhydrid) als Säurekomponente enthalten sind in einem Verhältnis α, β-ungesättigte zur zusätzlichen Säure von 3 zu 1 bis 1 zu 4, bevorzugt von 1 zu 1 bis 1 zu 2.

29. Wässrige Dispersionen nach mindestens einem der vorherigen Ansprüche,
**dadurch gekennzeichnet,**
**dass** ein Teil der Säuregruppen des urethanisierten, ungesättigten, amorphen Polyesterharzes neutralisiert sind.

30. Wässrige Dispersionen eines amorphen, urethanisierten, ungesättigten Polyesterharzes nach einem der vorherigen Ansprüche,
**dadurch gekennzeichnet,**
**dass** zur Neutralisation ein Amin und/oder eine anorganische Lauge verwendet wird.

31. Wässrige Dispersionen eines amorphen, urethanisierten, ungesättigten Polyesterharzes nach einem der vorherigen Ansprüche,
**dadurch gekennzeichnet,**
**dass** der Neutralisationsgrad zwischen 0,3 und 1,2, bevorzugt zwischen 0,4 und 1,1, besonders bevorzugt zwischen 0,6 und 1,05 liegt.

32. Verfahren zur Herstellung wässriger Dispersionen von amorphen, urethanisierten, ungesättigten Polyesterharzen,
wobei das Polyesterharz aufgebaut ist aus
I. einer Alkoholkomponente,
II. 20 bis 100 mol-% einer α, β ungesättigten Carbonsäurekomponente
und
0 bis 80 mol-% einer weiteren Carbonsäurekomponente,
III. mindestens einer Isocyanatkomponente,
und wobei die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas
aufweisen,
durch Umsetzung der Ausgangskomponenten I. und II. bei einer Temperatur von 150 bis 270 °C und folgender Urethanisierung durch Umsetzung mit der Isocyanatkomponente III., und das erhaltene Polyesterharz nach Neutralisation in die wässrige Phase dispergiert wird.

33. Verfahren nach Anspruch 32,
**dadurch gekennzeichnet,**
**dass** die Umsetzung der Ausgangskomponenten I und II bei einer Temperatur von 160 bis 230 °C, bevorzugt bei 160 bis 210 °C, erfolgt.

34. Verfahren nach Anspruch 32 bis 33,
**dadurch gekennzeichnet**,
die Umsetzung in einer Inertgasatmosphäre erfolgt.

35. Verfahren nach Anspruch 32 bis 34,
**dadurch gekennzeichnet,**
**dass** das Inertgas einen Sauerstoffgehalt von weniger als 50 ppm aufweist.

36. Verfahren nach Anspruch 32 bis 35,
**dadurch gekennzeichnet,**
**dass** Ausgangskomponenten nach den Ansprüchen 2 bis 30 eingesetzt werden.

37. Verfahren nach Anspruch 32 bis 36,
**dadurch gekennzeichnet,**
**dass** das amorphe, urethanisierte, ungesättigte Polyesterharz unter Verwendung eines organischen Hilfslösemittels in Wasser dispergiert wird.

38. Verfahren nach Anspruch 37,
**dadurch gekennzeichnet,**
**dass** das organische Hilfslösemittel abdestilliert wird.

## Claims

1. An aqueous dispersion of an amorphous urethanized unsaturated polyester resin,
the polyester resin being synthesized from
I. an alcohol component,
II. from 20 to 100 mol% of an α, β-unsaturated carboxylic acid component
and
from 0 to 80 mol% of a further carboxylic acid component,
III. at least one isocyanate component,
**characterized in that**
the alcohol component is composed of a Dicidol mixture of the isomeric compounds 3,8-bis(hydroxymethyl)tricyclo[5.2.1.0^{2,6}]decane, 4,8-bis(hydroxymethyl)-tricyclo[5.2.1.0^{2,6}]decane and 5, 8-bis-(hydroxymethyl)tricyclo[5.2.1.0^{2,6}]decane,
it being possible for each isomer to be present in a fraction of from 20 to 40% in the mixture, and the sum of the three isomers being from 90 to 100%,
and the mixture is present at least at from 10 to 100 mol% in the alcohol component of the polyester,
and the aqueous dispersion has
a) a nonvolatiles content of from 20% to 60% by weight,
b) a solvent content of from 0 to 60% by weight,
c) a pH of from 5.0 to 9.5, and
d) a viscosity at 20°C of from 20 to 500 mPas.

2. An aqueous dispersion according to claim 1, . **characterized in that** it comprises up to 10% of further isomers of Dicidol and/or trimeric and/or higher isomeric diols of the Diels-Alder reaction product of cyclopentadiene.

3. An aqueous dispersion according to at least one of the preceding claims, **characterized in that** at least 20 mol% of the alcohol component is composed of Dicidol.

4. An aqueous dispersion according to at least one of the preceding claims, **characterized in that** at least 30 mol% of the alcohol component is composed of Dicidol.

5. An aqueous dispersion according to at least one of the preceding claims, **characterized in that** at least 60 mol% of the alcohol component is composed of Dicidol.

6. An aqueous dispersion according to at least one of the preceding claims, **characterized in that**
100 mol% of the alcohol component is composed of Dicidol.

7. An aqueous dispersion according to at least one of the preceding claims, **characterized in that** the alcohol component contains not more than 90 mol% of further linear and/or branched, aliphatic and/or cycloaliphatic and/or aromatic diols and/or polyols.

8. An aqueous dispersion according to any one of the preceding claims, **characterized in that** it comprises as additional alcohols ethylene glycol, 1,2- and/or 1,3-propanediol, diethylene glycol, dipropylene glycol, triethylene glycol, tetraethylene glycol, 1,2- and/or 1,4-butanediol, 1,3-butylethylpropanediol, 1,3-methylpropanediol, 1,5-pentanediol, cyclohexanedimethanol, glycerol, hexanediol, neopentylglycol, trimethylolethane, trimethylolpropane and/or pentaerythritol, bisphenol A, B, C or F, norbornylene glycol, 1,4-benzylidimethanol and -diethanol, 2,4-dimethyl-2-ethylhexane-1,3-diol.

9. An aqueous dispersion according to at least one of the preceding claims, **characterized in that** it comprises as α,β-unsaturated acid component citraconic, fumaric, itaconic, maleic and/or mesaconic acid.

10. An aqueous dispersion according to any one of the preceding claims, **characterized in that** it comprises as α,β-unsaturated acid component fumaric acid and/or maleic acid (anhydride).

11. An aqueous dispersion according to any one of the preceding claims, **characterized in that** it comprises as further acid component aromatic and/or aliphatic and/or cycloaliphatic monocarboxylic acids and/or dicarboxylic acids and/or polycarboxylic acids.

12. An aqueous dispersion according to claim 11, **characterized in that** it comprises as further acid component phthalic acid, isophthalic acid, terephthalic acid, 1,4-cyclohexanedicarboxylic acid, succinic acid, sebacic acid, methyltetrahydrophthalic acid, methylhexahydrophthalic acid, hexahydrophthalic acid, tetrahydrophthalic acid, dodecanedioic acid, adipic acid, azelaic acid, pyromellitic acid and/or trimellitic acid, the anhydrides and/or methyl esters thereof, and also isononanoic acid and/or 2-ethylhexanoic acid.

13. An aqueous dispersion according to claim 12, **characterized in that** it comprises as further acid component II adipic acid and/or phthalic acid (anhydride).

14. An aqueous dispersion according to at least one of the preceding claims, **characterized in that** the acid components are composed in whole or in part of anhydrides and/or alkyl esters.

15. An aqueous dispersion according to at least one of the preceding claims, **characterized in that** it comprises the alcohol component of the polyester resin in a molar ratio of from 0.5 to 2.0:1 with respect to the acid component.

16. An aqueous dispersion according to at least one of the preceding claims, **characterized in that** it comprises the alcohol component of the polyester resin in a molar ratio of from 0.8 to 1.5:1 with respect to the acid component.

17. An aqueous dispersion according to at least one of the preceding claims, **characterized in that** it comprises the alcohol component of the polyester resin in a molar ratio of from 1.0 to 1.3:1 with respect to the acid component.

18. An aqueous dispersion according to at least one of the preceding claims, **characterized in that** the polyester resin has an acid number of from 1 to 200 mg KOH/g, preferably from 1 to 100, in particular from 10 to 50 mg KOH/g.

19. An aqueous dispersion according to at least one of the preceding claims, **characterized in that** the polyester resin has an OH number of from 1 to 200 mg KOH/g, preferably from 1 to 100, in particular preferably from 10 to 80 mg KOH/g.

20. An aqueous dispersion according to at least one of the preceding claims, **characterized in that** the amorphous unsaturated polyester includes for the urethanization as isocyanate component III a poly-and/or diisocyanate.

21. An aqueous dispersion according to claim 20, **characterized in that** the amorphous unsaturated polyester additionally includes for the urethanization a further polyol component.

22. An aqueous dispersion according to at least one of the preceding claims, **characterized in that** an aromatic, aliphatic and/or cycloaliphatic diisocyanate is included as diisocyanate for the urethanization.

23. An aqueous dispersion according to at least one of the preceding claims, **characterized in that** isophorone diisocyanate and/or hexamethylene diisocyanate and/or 4,4'-methylenebis (cyclohexyl diisocyanate) is included as diisocyanate for the urethanization.

24. An aqueous dispersion according to at least one of the preceding claims, **characterized in that** a bishydroxyalkylcarboxylic acid is included for the urethanization as a further polyol component.

25. An aqueous dispersion according to at least one of the preceding claims, **characterized in that** it comprises auxiliaries and additives.

26. An aqueous dispersion according to at least one of the preceding claims, **characterized in that** it comprises auxiliaries and additives selected from inhibitors, neutralizing agents, surfactants, oxygen scavengers and/or free-radical scavengers, catalysts, light stabilizers, colour brighteners, photosensitizers, thixotropic agents, antiskinning agents, defoamers, antistats, thickeners, thermoplastic additives, dyes, pigments, flame retardants, internal release agents, fillers and/or blowing agents.

27. An aqueous dispersion according to at least one of the preceding claims, **characterized in that** the alcohol component of the unsaturated amorphous polyester resin is composed of at least 80% of Dicidol mixture, and fumaric acid and/or maleic acid (anhydride) is present.

28. An aqueous dispersion according to any one of the preceding claims, **characterized in that** the amorphous urethanized unsaturated polyester resin further comprises adipic acid and/or phthalic acid (anhydride) as acid component, in a ratio of α,β-unsaturated acid to additional acid of from 3:1 to 1:4, preferably from 1:1 to 1:2.

29. An aqueous dispersion according to at least one of the preceding claims, **characterized in that** some of the acid groups of the urethanized unsaturated amorphous polyester resin have been neutralized.

30. An aqueous dispersion of an amorphous urethanized unsaturated polyester resin according to any one of the preceding claims, **characterized in that** an amine and/or an inorganic hydroxide solution is used for the neutralization.

31. An aqueous dispersion of an amorphous urethanized unsaturated polyester resin according to any one of the preceding claims, **characterized in that** the degree of neutralization is from 0.3 to 1.2, preferably from 0.4 to 1.1, more preferably from 0.6 to 1.05.

32. A process for preparing an aqueous dispersion of an amorphous urethanized unsaturated polyester resin,
the polyester resin being synthesized from
I. an alcohol component,
II. from 20 to 100 mol% of an α,β-unsaturated carboxylic acid component
and
from 0 to 80 mol% of a further carboxylic acid component,
III. at least one isocyanate component,
wherein the alcohol component is composed of a Dicidol mixture of the isomeric compounds 3,8-bis(hydroxymethyl)tricyclo[5.2.1.0^{2,6}]decane, 4,8-bis(hydroxymethyl)tricyclo[5.2.1.0²,⁶]decane and 5,8-bis(hydroxymethyl)tricyclo[5.2.1.0^{2,6}]decane,
it being possible for each isomer to be present in a fraction of from 20 to 40% in the mixture, and the sum of the three isomers being from 90 to 100%,
and the mixture is present at least at from 10 to 100 mol% in the alcohol component of the polyester,
and the aqueous dispersion has
a) a nonvolatiles content of from 20% to 60% by weight,
b) a solvent content of from 0 to 60% by weight,
c) a pH of from 5.0 to 9.5, and
d) a viscosity at 20°C of from 20 to 500 mPas, by reacting starting components I and II at a temperature of from 150 to 270°C, with subsequent urethanization by reacting the product with the isocyanate component III, and dispersing the resultant polyester resin, following neutralization, into the aqueous phase.

33. A process according to claims 32, **characterized in that** the reaction of starting components I and II takes place at a temperature of from 160 to 230°C, preferably at from 160 to 210°C.

34. A process according to either of claims 32 and 33, **characterized in that** the reaction takes place in an inert gas atmosphere.

35. A process according to any of claims 32 to 34, **characterized in that** the inert gas has an oxygen content of less than 50 ppm.

36. A process according to any of claims 32 to 35, **characterized in that** starting components according to any of claims 2 to 30 are used.

37. A process according to any of claims 32 to 36, **characterized in that** the amorphous urethanized unsaturated polyester resin is dispersed in water using an organic auxiliary solvent.

38. A process according to claim 37, **characterized in that** the organic auxiliary solvent is removed by distillation.

## Revendications

1. °) Dispersions aqueuses de résines de polyester insaturées, uréthanisées, amorphes, la résine de polyester étant constituée des composants suivants:
I. un composant alcool,
II. 20 à 100 % molaire d'un composant acide carboxylique α, β insaturé, et
0 à 80 % molaire d'un autre composant acide carboxylique ,
III. au moins un composant isocyanate,
caracténsees en ce que
le composant alcool est constitué d'un mélange dicidol des composés isomères 3,8-bis (hydroxyméthyl)tricyclo [5.2.1.0^{2,6}] décane, 4,8-bis (hydroyméthyl)tricyclo [5.2.1.0^{2,6}] décane et 5,8-bis(hydroxyméthyl)tricyclo [5.2:10^{2,6}] décane.
chaque isomère pouvant être contenu dans le mélange dans une proportion de 20 à 40 % et la somme des trois isomères représentant 90 à 100%,
le mélange étant présent à raison d'au moins 10 à 100 moles % dans le composant alcool du polyester,
et les dispersions aqueuses présentant :
a) une teneur en constituants non volatils de 20 % en poids à 60 % en poids,
b) une teneur en solvant de 0 à 60 % en poids,
c) un pH situé entre 5.0 et 9.5.
d) une viscosité à 20 °C de 20 à 500 mPas.

2. Dispersions aqueuses selon la revendication 1,
**caractérisées en ce qu'**
elles contiennent jusqu'à 10 % d'autres isomères du dicidol et/ou trimères et/ou diols isomères supérieurs du produit de la réaction de Diels-Alder du cyclopentadiène.

3. Dispersions aqueuses selon au moins une des revendications précédentes,
**caractérisées en ce que**
le composant alcool est constitué à raison d'au moins 20 % molaire de dicidol.

4. Dispersions aqueuses selon au moins une des revendications précédentes.
**caractérisées en ce que**
le composant alcool est constitué à raison d'au moins 30 % molaire de dicidol.

5. Dispersions aqueuses selon au moins une des revendications précédentes.
**caractérisées en ce que**
le composant alcool est constitué à raison d'au moins 60 % molaire de dicidol.

6. Dispersions aqueuses selon au moins une des revendications précédentes,
**caractérisées en ce que**
le composant alcool est constitué à 100 % molaire de dicidol.

7. Dispersions aqueuses selon au moins une des revendications précédentes,
**caractérisées en ce que**
le composant alcool contient au maximum 90 % molaire d'autres diols et/ou polyols aliphatiques linéaires et/ou ramifiés et/ou cycloaliphatiques et/ou aromatiques.

8. Dispersions aqueuses selon au moins une des revendications précédentes.
**caractérisées en ce qu'**
elles contiennent comme alcools supplémentaires l'éthylène glycol, le(s) 1,2- et/ou 1,3-propanediol(s), les diéthylène-, dipropylène-, triéthylènetétraéthylèneglycols, le(s) 1,2- et/ou 1,4-butanediol(s). le 1,3-butyléthylpropanediol, le 1,3-méthylpropanediol, le 1,5-pentanediol, le cyclohexanediméthanol. le glycérol, l'hexanediol, le néopentylglycol, le triméthyloléthane, le triméthylolpropane et/ou la pentaérythrite bis-phénol A, B, C, F, le norbornylèneglycol, les 1,4-benzyldiméthanol et - éthanol, le 2,4-diméthyl-2-éthylhexan-1,3-diol.

9. Dispersions aqueuses selon au moins une des revendications précédentes,
**caractérisées en ce qu'**
elles contiennent, comme composant(s) acide carboxylique α, β insaturé, l'acide citraconique l'acide fumarique, l'acide itaconique, l'acide maléique, et/ou l'acide mésaconique.

10. Dispersions aqueuses selon une des revendications précédentes,
**caractérisées en ce qu'**
elles contiennent, comme composant(s) acide carboxylique α, β insaturé, l'acide fumarique et /ou l'acide (anhydride)maleiquc.

11. Dispersions aqueuses selon une des revendications précédentes,
**caractérisées en ce qu'**
elles contiennent, comme autres composants acides, des acides mono-carboxyliques , et/ou acides dicarboxyliques et/ou des acides plycarboxyliques aromatiques et/ou aliphatiques et/ou cycloaliphatiques.

12. Dispersions aqueuses selon la revendication 11,
**caractérisées en ce qu'**
elles contiennent, comme autre composant(s) acide(s), l'acide phthalique, l'acide isophthalique, l'acide téréphthalique, l'acide 1,4-cyclohexanedicarboxylique, l'acide succinique, l'acide sébacique, l'acide méthyltétra-, méthylhexahydrophthalique, l'acide hexahydrophthalique, l'acide tétrahydrophthalique, l'acide dodécanedioique, l'acide adipique, l'acide azélainique, l'acide pyromellithique et/ou l'acide trimellithique, leurs hydrures d'acides et/ou esters méthyliques ainsi que l'acide isononanoique et/ou l'acide 2-éthylhexanoïque.

13. Dispersions aqueuses selon la revendication 12,
**caractérisées en ce qu'**
elles contiennent, comme autre(s) composant(s) acide(s), l'acide adipique et/ou l'acide (anhydride)phthalique.

14. Dispersions aqueuses selon au moins une des revendications précédéntes,
**caractérisées en ce que**
les composants acides sont constitués, en partie ou entièrement, d'anhydrides et/ou d'esters d'alkyle.

15. Dispersions aqueuses selon au moins une des revendications précédentes,
**caractérisées en ce que**
le composant alcool de la résine de polyester est contenu dans un rapport molaire de 0,5 à 2,0 : 1 par rapport au composant acide.

16. Dispersions aqueuses selon au moins une des revendications précédentes,
**caractérisées en ce que**
le composant alcool de la résine de polyester est contenu dans un rapport molaire de 0,8 à 1,5 : 1 par rapport au composant acide.

17. Dispersions aqueuses selon au moins une des revendications pré cédentes,
**caractérisées en ce que**
le composant alcool de la résine de polyester est contenu dans un rapport molaire de 1,0 à 1,3 : 1 par rapport au composant acide.

18. Dispersions aqueuses selon au moins une des revendications précédentes,
**caractérisées en ce que**
les résines de polyester présentent un indice d'acide situé entre 1 et 200 mg KOH/g. de préférence entre 1 et 100, en particulier entre 10 et 50 mg KOH/g.

19. Dispersions aqueuses selon au moins une des revendications précédentes.
**caractérisées en ce que**
les résines de polyester présentent un indice d'OH entre 1 et 200 mg KOH/g, de préférence entre 1 et 100, particulièrement préférablement entré 10, et 80 mg KOH/g.

20. Dispersions aqueuses selon au moins une des revendications précédentes,
**caractérisées en ce que**
le polyester insaturé, amorphe, contient pour l'uréthanisation, un poly-et/ou diisocyanate comme composant isocyanate III.

21. Dispersions aqueuses selon la revendication 20,
**caractérisées en ce que**
le polyester insaturé, amorphe, contient en outre , pour l'uréthanisation, un autre composant polyol.

22. Dispersions aqueuses selon au moins une des revendications précédentes.
**caractérisées en ce que**
comme diisocyanate pour l'uréthanisation, elles contiennent, un diisocyanate aromatique, aliphatique et/ou cycloaliphatique.

23. Dispersions aqueuses selon au moins une des revendications précédentes,
**caractérisées en ce que**
comme diisocyanate pour l'uréthanisation, elles contiennent, le diisocyanate d'isophorone et/ou le diisocyanate d'hexaméthylène, et/ou le 4,4'méthylènebis(cyclohexyldiisocyanate).

24. Dispersions aqueuses selon au moins une des revendications précédentes,
**caractérisées en ce que**
pour l'uréthanisation, comme autre composant polyol, elles contiennent un acide bishydroxyalkylcarboxylique.

25. Dispersions aqueuses selon au moins une des revendications précédentes,
**caractérisées en ce qu'**
elles contiennent des adjuvants et des additifs.

26. Dispersions aqueuses selon au moins une des revendications précédentes,
**caractérisées en ce qu'**
elles contiennent des adjuvants et additifs choisis parmi des inhibiteurs, des agents de neutralisation, des substances tensioactives, des fixateurs d'oxygène et/ou de radicaux, des catalyseurs, des agents photo-protecteurs, des éclaircisseurs de couleur, des photo-sensibilisants, des agents de thixotropie, des agents anti-peau, des anti-mousse. des anti-statiques, des agents épaississants, des additifs thermoplastiques, des colorants, des pigments, des produits ignifugeants, des agents séparateurs internes, des charges et/ou des agents porogènes.

27. Dispersions aqueuses selon au moins une des revendications précédentes,
**caractérisées en ce que**
le composant alcool de la résine de polyesters amorphe, insaturée, est constitué d'au moins 80 % de mélange dicidol et contient de l'acide fumanque et/ou de l'acide (anhydride)maléïque.

28. Dispersions aqueuses selon une des revendications précédentes,
**caractérisées en ce que**
dans la résine de polyester insaturée , uréthanisée, amorphe, se trouvent en outre contenues) de l'acide adipique et/ou de l'acide (anhydride)phthalique comme composant(s) acide(s) dans un rapport acide α, β insaturé à acide supplémentaire de 3 : 1 à 1 : 4, de préférence de 1 : 1 à 1 : 2.

29. Dispersions aqueuses selon au moins une des revendications précédentes.
**caractérisées en ce qu'**
une partie des groupes acide de la résine de polyester amorphe, insaturée, uréthanisée, est neutralisée.

30. Dispersions aqueuses d'une résine de polyester insaturée, amorphe, uréthanisée, selon au moins une des revendications précédentes,
**caractérisées en ce que**
pour la neutralisation on utilise une amine et/ou une lessive inorganique.

31. Dispersions aqueuses d'une résine de polyester insaturée, uréthanisée, amorphe, selon au moins une des revendications précédentes,
**caractérisées en ce que**
le degré de neutralisation se trouve entre 0,3 et 1,2, de préférence entre 0,4 et 1,1, et particulièrement de préférence entre 0,6 et 1,05.

32. Procédé de préparation de dispersions aqueuses de résines de polyester insaturées , uréthanisées, amorphes,
la résine de polyester étant constituée des composants suivants :
I. un composant alcool,
II. 20 à 100 % molaire d'un composant acide carboxylique α, β insaturé, et
0 à 80 % molaire d'un autre composant acide carboxylique ,
III. au moins un composant isocyanate,
**caractérisées en ce que**
le composant alcool est constitué d'un mélange dicidol des composés isomères 3,8-bis (hydroxyméthyl)tricyclo [5.2.1.0^{2,6}] décane, 4,8-bis (hydroyméthyl)tricyclo [5.2.1.0^{2,6}] décane et 5,8-bis(hydroxpméthyltricyclo [5.2.1.0^{2,6}] décane,
chaque isomère pouvant être contenu dans le mélange dans une proportion de 20 à 40 % et la somme des trois isomères représentant 90 à 100 %,
le mélange étant présent à raison d'au moins 10 à 100 % molaire dans le composant alcool du polyester,
et les dispersions aqueuses présentant :
a) une teneur en constituants non volatils de 20 % en poids à 60 % en poids,
b) une teneur en solvant de 0 à 60 % en poids,
c) un pH situé entre 5,0 et 9.5.
d) une viscosité à 20 °C de 20 à 500 mPas .
par réaction des composants de départ I et II à une température de 150 à 270 °C suivie d'une uréthanisation par réaction avec le composant isocyanate III, et la résine de polyester obtenue est dispersée, après neutralisation, dans la phase aqueuse.

33. Procède selon la revendication 32,
**caractérisé en ce que**
la réaction des composants de départ I et II a lieu à une température de 160 à 230 °C, de préférence à 160 à 210°C.

34. Procédé selon la revendication 32 ou 33.
**caractérisé en ce que**
la réaction a lieu dans une atmosphère de gaz inerte.

35. Procédé selon les revendications 32 à 34,
**caractérisé en ce que**
le gaz inerte présente une teneur en oxygène inférieure à 50 ppm.

36. Procédé selon les revendications 32 à 35
**caractérisé en ce que**
on utilise les composants de départ selon les revendications 2 à 30.

37. Procédé selon les revendications 32 à 36.
**caractérisé en ce que**
la résine de polyester insaturée, uréthanisée, amorphe, est dispersée dans l'eau avec utilisation d'un solvant auxiliaire organique.

38. Procédé selon la revendication 37,
**caractérisé en ce que**
le solvant auxiliaire organique est éliminé par distillation.
